# FASCICULE DE BREVET EUROPEEN

(11) **EP 0 963 517 B1**
(45) Date de publication et mention de la délivrance du brevet: **16.04.2003**
(21) Numéro de dépôt: 97911312.3
(22) Date de dépôt: 22.10.1997
(51) Int. Cl.: F02M 55/02

(54) **DISPOSITIF DE DISTRIBUTION DE CARBURANT POUR L'ALIMENTATION DES CYLINDRES D'UN MOTEUR A COMBUSTION INTERNE**
VERTEILERVORRICHTUNG FÜR DIE KRAFTSTOFFVERSORGUNG ZU DEN ZYLINDERN EINER BRENNKRAFTMASCHINE
DEVICE DISPENSING FUEL FOR SUPPLYING AN INTERNAL COMBUSTION ENGINE CYLINDER

(30) Priorité: 09.07.1997 FR 9708713
(43) Date de publication de la demande: 15.12.1999
(73) Titulaire: Cideb, 77610 Fontenay Tresigny (FR)
(72) Inventeur: CIECKO, Daniel, F-77170 Brie-Comte-Robert (FR)
(74) Mandataire: CABINET BONNET-THIRION
(86) Numéro de dépôt international: FR9701887
(87) Numéro de publication internationale: WO99002850

(56) Documents cités:
- EP-A- 0 266 269
- EP-A- 0 427 977
- DE-A- 3 817 413
- DE-C- 19 607 521

## Description

L'invention se rapporte à un dispositif de distribution de carburant pour l'alimentation des cylindres d'un moteur à combustion interne, notamment un moteur à injection directe sous relativement haute pression.

L'invention concerne plus particulièrement un nouveau mode de construction d'un tel dispositif, bien adapté pour supporter la pression d'injection tout en étant d'un prix de revient faible, facile à fabriquer et d'implantation aisée.

Classiquement, dans un moteur à combustion interne, à injection directe, le distributeur de carburant comporte un corps de forme générale tubulaire, relié par une extrémité axiale à la sortie d'une pompe de carburant et comportant, disposées sur sa longueur, plusieurs prises de sortie réalisées à la faveur de bossages saillants, ces prises de sortie sont reliées aux différents cylindres et éventuellement à d'autres dispositifs tels qu'un régulateur, un amortisseur ou autre.

Les orifices internes des différentes prises doivent être exempts de toute bavure ou copeau détachable. Pratiquement, cela nécessite un usinage de finition particulièrement soigné de la paroi interne du distributeur. Les bossages sont rapportés extérieurement au moyen de bagues frettées, ce qui est une technique coûteuse. Sinon, il faut réaliser une pièce monobloc lourde.

Un tel corps tubulaire comporte également plusieurs supports ou pattes d'ancrage pour sa fixation le long du moteur. La forme même d'un tel distributeur et la nécessité de le fixer en plusieurs points obligent pratiquement à définir un modèle spécifique pour chaque type de moteur.

Les extrémités axiales de la partie tubulaire, sont fermées par des bouchons filetés qui résistent mal à la pression.

L'invention permet d'éviter tous ces inconvénients.

Plus précisément, l'invention concerne un dispositif de distribution de carburant pour l'alimentation des cylindres d'un moteur à combustion interne, par injection directe, du type comportant un corps creux dans la paroi duquel sont pratiqués des accès destinés à être reliés, notamment, à une source d'alimentation de carburant sous pression et à une pluralité d'injecteurs alimentant respectivement lesdits cylindres, caractérisé en ce que ledit corps creux est constitué de l'assemblage soudé d'au moins deux éléments définissant entre eux une cavité au moins sensiblement sphérique et en ce que chaque accès comprend un trou de faible section d'orientation sensiblement radiale et un trou taraudé de plus grand diamètre, débouchant à l'extérieur et se raccordant audit trou de faible section.

On dénomme "accès" tout élément de raccordement au distributeur, qu'il s'agisse d'une entrée de carburant ou d'une sortie reliée à un cylindre du moteur ou encore toute liaison à un régulateur ou amortisseur.

Les deux éléments peuvent être assemblés par brasure ou autre soudure. Ils définissent une cavité sensiblement sphérique. Ces éléments peuvent être en acier ou tout autre métal convenable compte tenu des conditions de fonctionnement requises.

Selon un mode de réalisation possible, les accès (ou la plupart d'entre eux) peuvent être définis sur une couronne rapportée à la surface extérieure de l'un des éléments.

Selon un autre mode de réalisation possible, au moins un accès précité est défini dans un embout rapporté par soudure ou autre à l'extérieur de l'un ou l'autre des deux éléments précités, ledit embout étant rapporté de façon que ledit accès communique avec un trou correspondant pratiqué dans la paroi dudit élément.

Selon un mode de réalisation possible, la paroi interne d'un premier élément précité forme une première calotte sphérique prolongée par un manchon cylindrique ouvert avant assemblage. Un second élément précité comporte une partie cylindrique, formant bouchon, engagée après assemblage dans ledit manchon et comportant une cuvette formant une seconde calotte sphérique complémentaire de la première. Le second élément forme un socle de montage sur moteur, et ce socle comporte une collerette annulaire faisant saillie extérieurement par rapport au bouchon cylindrique engagé dans l'autre élément. Cette collerette est soudée ou brasée à une zone annulaire plate correspondante du premier élément, entourant l'ouverture du manchon.

En outre, une cavité annulaire est ménagée entre les deux éléments au voisinage de la zone de soudure pour récupérer les particules de matière résultant de l'opération de soudure et éviter ainsi toute intrusion de matière dans la cavité sphérique intérieure.

Les accès peuvent être, tous, ménagés dans l'un des éléments, en l'occurrence le premier.

Les orifices internes des trous de faible section qui débouchent à l'intérieur de la cavité peuvent facilement être ébavurés et gaietés avant la soudure, la paroi interne de ladite première cavité étant largement accessible aux outils, par le manchon cylindrique.

L'invention sera mieux comprise et d'autres avantages de celle-ci apparaîtront plus clairement à la lumière de la description qui va suivre de plusieurs modes de réalisation d'un dispositif de distribution conforme à son principe, donnée uniquement à titre d'exemple et faite en référence aux dessins non limitatifs annexés dans lesquels:
- la figure 1 est une vue en perspective éclatée des principaux éléments constitutifs d'un dispositif de distribution conforme à l'invention;
- la figure 2 est une coupe en élévation du dispositif de la figure 1, les éléments étant assemblés;
- la figure 3 est une coupe en élévation d'un autre mode de réalisation d'un dispositif de distribution conforme à l'invention;
- la figure 4 est une vue en élévation et en coupe, d'un autre mode de réalisation d'un dispositif de distribution de carburant conforme à l'invention, la coupe IV-IV étant indiquée à la figure 5;
- la figure 5 est une vue de dessus de la figure 4;
- la figure 6 est une vue en élévation et en coupe d'un autre mode de réalisation d'un dispositif de distribution de carburant conforme à l'invention, la coupe VI-VI étant indiquée à la figure 7;
- la figure 7 est une vue de dessus du dispositif de la figure 6;
- la figure 8 est une vue de détail en coupe illustrant le montage d'un élément de raccordement dans l'un des accès du dispositif de distribution;
- la figure 9 est une vue analogue à la figure 6, illustrant une autre variante, suivant une coupe IX-IX de la figure 10;
- la figure 10 est une coupe X-X de la figure 9;
- la figure 11 est une vue partielle selon la flèche XI de la figure 10; et
- la figure 12 est une vue analogue à la figure 4, illustrant une autre variante.

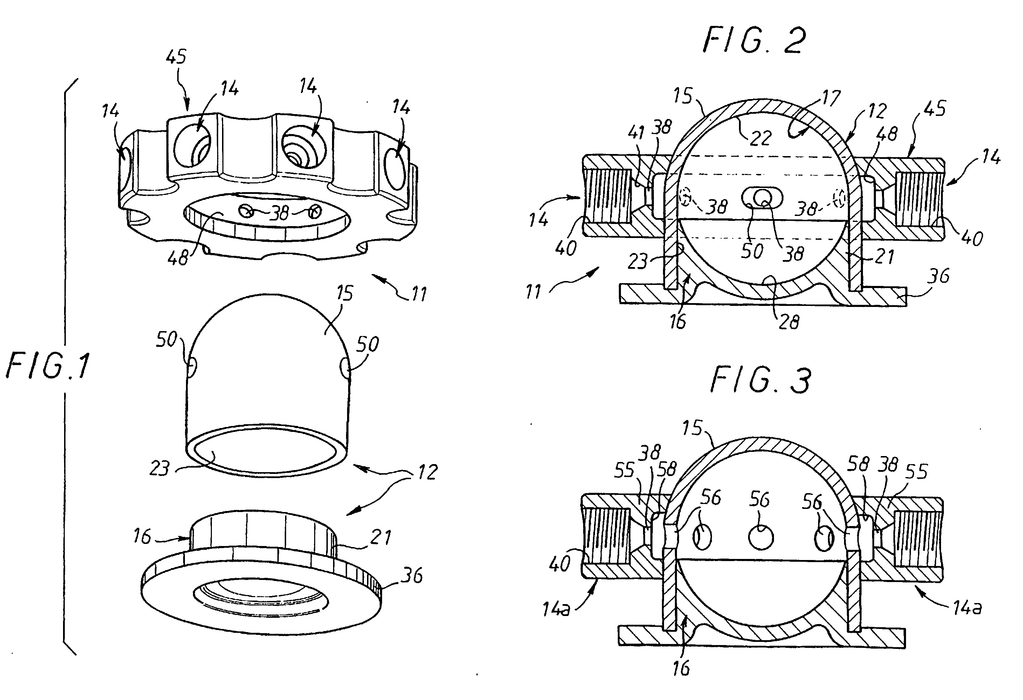

En considérant plus particulièrement les figures 1 et 2, on a représenté un dispositif de distribution de carburant 11 pour l'alimentation des cylindres d'un moteur à combustion interne, plus particulièrement un moteur à injection directe pilotée.

Dans un tel type de moteur, non représenté, le carburant est délivré au dispositif 11 sous une relativement haute pression, de l'ordre de 120 bars pour un moteur à essence, par une pompe et est distribué à des injecteurs pilotés par des électrovannes.

Le carburant est maintenu en permanence sous pression dans le dispositif objet de l'invention et les électrovannes liées aux injecteurs pilotent l'ouverture de ces derniers à des instants donnés du cycle de fonctionnement du moteur et pour une durée variable qui détermine la quantité de carburant injectée.

Pour ce faire, le dispositif de distribution comporte essentiellement un corps creux 12, ici de configuration interne sphérique et portant un certain nombre d'accès 14 destinés à être reliés, notamment, à une source d'alimentation de carburant sous pression, c'est-à-dire la pompe et à une pluralité d'injecteurs alimentant respectivement les cylindres du moteur.

D'autres accès 14 peuvent être réservés au raccordement de moyens de contrôle comme par exemple un régulateur, et/ou un amortisseur et/ou une prise de pression. Ainsi, dans l'exemple représenté qui comporte huit accès, l'un d'eux est destiné à être relié à la sortie d'une pompe, six autres peuvent être destinés à être connectés respectivement aux injecteurs d'un moteur à essence six cylindres et le dernier peut être destiné, par exemple, à être connecté à un régulateur.

Dans l'exemple, tous les accès 14 sont structurellement identiques.

Le corps creux 12 est constitué de l'assemblage soudé de deux éléments 15, 16, définissant entre eux une cavité sphérique 17. La paroi interne du premier élément 15 forme une première calotte sphérique 22, intérieurement, prolongée par un manchon cylindrique 23 ouvert avant assemblage (figure 1). Le second élément 16 comporte un bouchon cylindrique 21 de diamètre extérieur correspondant au diamètre intérieur du manchon 23. Il est engagé après assemblage dans ce manchon et il comporte une cuvette à son extrémité interne. Cette cuvette forme une seconde calotte sphérique 28 complémentaire de la première calotte sphérique 22 de sorte que, après assemblage soudé des deux éléments 15 et 16, la cavité définie à l'intérieur du dispositif de distribution a la forme d'une sphère. Cette forme sphérique offre une grande résistance à la pression. De ce fait, les épaisseurs des parois des deux éléments sont relativement faibles, toutes choses égales par ailleurs. Le volume intérieur de la cavité peut être ajusté à la valeur voulue en fonction de la cylindrée du moteur. Le volume extérieur du dispositif varie peu en fonction de la cylindrée. Le second élément 16 comporte en outre un socle de montage 36 permettant la fixation du dispositif de distribution en un point unique sur le bâti du moteur ou de la pompe. Ce socle forme une collerette annulaire qui peut, par exemple, comporter des trous pour la fixation du dispositif. Les deux éléments 15, 16 sont ici en acier. Ils sont de préférence soudés l'un à l'autre par brasure. Ils pourraient aussi être en aluminium ou alliage d'aluminium.

Selon un mode de réalisation possible, les accès 14 sont rapportés par soudage ou brasure à l'extérieur d'au moins l'un des deux éléments, en l'occurrence ici le premier élément 15.

Chaque accès comprend un trou 38 de faible section d'orientation sensiblement radiale, communiquant avec l'intérieur de la cavité et un trou taraudé 40 de plus grand diamètre débouchant à l'extérieur et se raccordant audit trou de faible section.

Dans l'exemple, les accès 14 (ou au moins certains d'entre eux) sont définis sur une couronne 45 rapportée à la surface extérieure de l'un des éléments. Dans l'exemple, la couronne est soudée par brasure ou autre soudure à la surface extérieure dudit premier élément 15. Pour chaque accès, le trou taraudé 40 et le trou de faible section 38 sont coaxiaux et alignés et ils se raccordent l'un à l'autre par une portée conique 41. La portée conique pourrait être remplacée par une portée plate.

Les accès débouchent dans une gorge annulaire 48 creusée sur la face intérieure de la couronne 45. Cette gorge communique avec des trous 50 pratiqués au travers dudit premier élément 15.

Les trous 50 sont au nombre de deux, de forme oblongue et diamétralement opposés. Lorsque la couronne est soudée sur ledit premier élément, son plan médian est sensiblement confondu avec un plan équatorial de la cavité. La gorge annulaire 48 définit avec la surface extérieure du premier élément 15 un conduit de distribution annulaire établissant une communication entre les conduits de faible section 38 des différents accès et les deux trous oblongs 50 pratiqués dans la paroi du premier élément.

Selon la variante de la figure 3, au contraire, chaque accès 14a est défini dans un embout 55 rapporté par soudage à l'extérieur de l'un ou l'autre des deux éléments précités. En variante, une partie seulement des accès pourrait être agencée de cette façon. Un tel embout est rapporté de façon que ledit accès communique radialement avec un trou 56 correspondant pratiqué dans la paroi de l'élément 15 sur lequel il est soudé. Lesdits embouts sont de préférence fixés par brasure.

Le trou de faible section 38 de chaque accès débouche dans une creusure 58 pratiquée à l'extrémité de l'embout 55, du côté où il est soudé à l'élément 15.

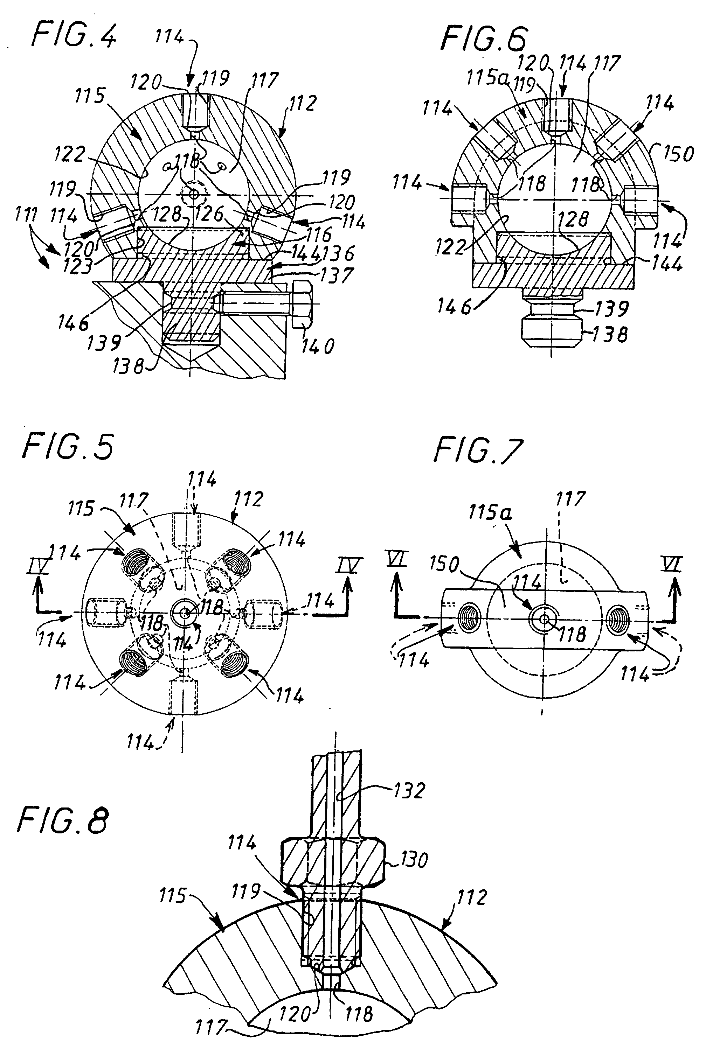

En considérant plus particulièrement les figures 4 et 5, on a représenté un autre dispositif de distribution de carburant 111 pour l'alimentation des cylindres d'un moteur à combustion interne, par exemple un moteur Diesel ou à essence à injection directe pilotée, sous haute pression. Dans un tel type de moteur, non représenté, le carburant est délivré au dispositif 111 sous haute pression (de l'ordre de 1400 à 2000 bars pour un moteur Diesel et 100 à 150 bars pour un moteur à essence) par une pompe et est distribué à des injecteurs pilotés par des électrovannes.

Le dispositif de distribution comporte essentiellement un corps creux 112 dans la paroi duquel sont pratiqués des accès 114 destinés à être reliés, notamment, à une source d'alimentation de carburant sous pression (pompe) et à une pluralité d'injecteurs alimentant respectivement les cylindres du moteur. D'autres accès 114 peuvent être réservés au raccordement de moyens de contrôle, comme par exemple un régulateur et/ou un amortisseur et/ou une prise de pression.

Ainsi, dans l'exemple des figures 4 et 5 qui comportent neuf accès, l'un d'eux est destiné à être relié à la sortie d'une pompe, six autres sont destinés à être connectés respectivement aux injecteurs d'un moteur Diesel six cylindres et deux autres sont destinés à être respectivement connectés à un régulateur et à un amortisseur. Dans l'exemple, tous les accès 114 sont structurellement identiques.

Le corps creux 112 est constitué de l'assemblage soudé d'au moins deux éléments 115, 116 définissant entre eux une cavité 117. Cette cavité est avantageusement au moins sensiblement sphérique et de préférence sphérique. De plus, comme représenté, chaque accès comprend un trou de faible section 118 d'orientation radiale débouchant à l'intérieur de la cavité 117 et un trou taraudé 119 de plus grand diamètre débouchant à l'extérieur et se raccordant audit trou de faible section, ici par une portée conique 120, cette dernière étant dans le prolongement axial du trou taraudé 119.

Dans l'exemple, tous les accès 114 sont agencés radialement. Plus précisément, la paroi interne d'un premier élément 115 forme une première calotte sphérique 122, intérieurement, prolongée par un manchon cylindrique 123, ouvert avant assemblage, tandis qu'un second élément 116 comporte un bouchon cylindrique 121, de diamètre extérieur correspondant au diamètre intérieur du manchon 123, engagé après assemblage dans ledit manchon et comportant une cuvette à son extrémité interne. Cette cuvette forme une seconde calotte sphérique 128 complémentaire de la première de sorte que, après assemblage soudé des deux éléments 115, 116 décrits ci-dessus, la cavité interne définie à l'intérieur du dispositif de distribution a la forme d'une sphère.

Les deux éléments 115, 116 peuvent être en acier mais ils seront de préférence en aluminium ou en alliage d'aluminium, ce qui permet d'obtenir un dispositif de distribution beaucoup plus léger, toutes choses égales par ailleurs, tout en évitant la nécessité d'un traitement anticorrosion. La forme sphérique de la cavité offre une grande résistance à la pression. Le volume intérieur de cette cavité peut être ajusté à la valeur voulue, en fonction de la cylindrée du moteur. Le volume extérieur du dispositif varie peu en fonction de la cylindrée.

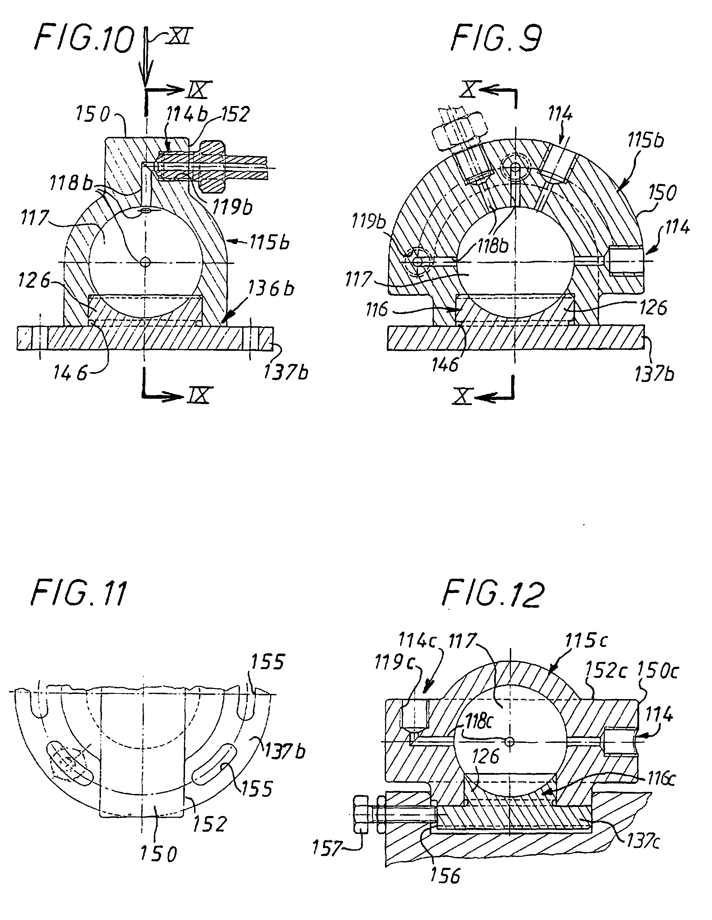

Comme on le voit sur la figure 8, un élément de raccordement 130 est fileté extérieurement et fixé par ce moyen dans le trou taraudé 119 de l'accès correspondant. Il comporte un canal axial 132 du même diamètre que ledit trou de faible section 118, qui débouche dans la cavité. Il comporte une extrémité conique qui vient s'appliquer de façon étanche contre la portée conique 120 définie entre ledit trou taraudé 119 et ledit trou de faible section 118. Ainsi, le canal 132 et le trou 118 se trouvent alignés. Le fait que les accès débouchent à l'intérieur de la cavité par des forages de petit diamètre (inférieur à 3 mm, dans la pratique) donne au système une très grande résistance à la pression. Les performances sont encore améliorées si ces orifices sont gaietés au moyen d'un outil de forme appropriée, par exemple à surface sphérique, écrouissant convenablement le bord de chaque orifice.

De plus, comme représenté, le second élément 114 comporte un socle de montage 136 permettant la fixation du dispositif de distribution en un point unique sur le bâti du moteur, ou directment sur la pompe.

Dans l'exemple représenté, le socle comporte une embase 137 à contour circulaire prolongée axialement par un élément cylindrique 138 muni d'une gorge de serrage 139 permettant la fixation du dispositif au moyen d'une seule vis 140.

Le socle forme une collerette annulaire faisant saillie extérieurement par rapport au bouchon cylindrique et c'est cette collerette qui est soudée à une zone annulaire plate correspondante du premier élément, définie tout autour de l'ouverture du manchon 123. On pratique une soudure sans apport de métal, par exemple par friction ou encore une soudure électrique par contact ou par faisceau d'électron. La zone de soudure porte la référence 144 sur les dessins. Un évidement annulaire 146 est ménagé entre les deux éléments au voisinage de la zone de soudure. Cet évidement constitue un réceptacle permettant de recevoir et de retenir de la matière en excès, après l'opération de soudure, évitant ainsi qu'une partie de celle-ci parvienne jusqu'à la cavité sphérique 117.

Dans l'exemple, l'évidement annulaire 146 est défini par une gorge annulaire pratiquée dans le bouchon cylindrique 126 dudit second élément 116 au voisinage de la collerette du socle.

Les deux éléments sont ébauchés par matriçage dans le cas de l'aluminium ou l'alliage d'aluminium ou par forgeage ou extrusion dans le cas de l'acier.

Dans chaque cas, la partie interne du premier élément peut facilement être usinée avec précision pour déterminer le volume de la cavité, adapté au moteur, les bavures aux orifices des trous de petit diamètre peuvent facilement être éliminés, avant la soudure. Ainsi, les deux éléments 115, 116 sont intérieurement parfaitement propres et exempts de copeaux détachables avant l'assemblage par soudure.

Avantageusement, dans l'exemple des figures 4 et 5 comportant un grand nombre d'accès, on a réparti ces derniers sur au moins la plus grande partie du premier élément 115. Tous les accès sont pratiqués radialement et débouchent sur la première calotte sphérique 122 précitée; ils sont sensiblement équidistants les uns des autres, comme cela apparaît sur la figure 5.

Le mode de réalisation des figures 6 et 7 (où les éléments de structure analogues portent les mêmes références numériques qu'aux figures 4 et 5), est plus particulièrement adapté pour un moteur ne nécessitant qu'un nombre limité d'accès, par exemple un moteur de quatre cylindres. Dans ce cas, les accès 114 sont répartis sensiblement régulièrement le long d'une surépaisseur 150 en forme d'arceau, dudit premier élément.

Dans cet exemple, le plan médian de la surépaisseur 150 est perpendiculaire à l'embase 137. Il contient le centre de la cavité sphérique 117. Cette surépaisseur est calculée en fonction de l'épaisseur de paroi nécessaire pour ménager des accès 114 présentant une longueur de filetage convenable. Autrement dit, partout ailleurs, l'épaisseur de paroi dudit premier élément 115a a été réduite, pour alléger le dispositif. Chaque accès 114 d'orientation radiale se compose d'un trou de faible section 118 et d'un trou taraudé 119, alignés. Si nécessaire, les accès peuvent être répartis le long de plusieurs arceaux de ce type.

En se reportant aux figures 9 à 11, on a représenté une autre variante dans laquelle, comme dans le mode de réalisation précédent, ledit premier élément 115b est pourvu d'une surépaisseur 150 en forme d'arceau dans laquelle sont pratiqués les accès. Certains accès 114 sont, comme précédemment, agencés entièrement radialement. En revanche, d'autres accès 114b comportent chacun un trou de faible section 118b d'orientation radiale et un trou taraudé 119b perpendiculaire à celui-ci et débouchant sur une face latérale annulaire plate 152 de ladite surépaisseur 150 en forme d'arceau, la portée conique 120 prolongeant le trou taraudé 119b. Ceci permet d'augmenter le nombre d'accès sur l'arceau, toutes choses égales par ailleurs.

De plus, en fonction de l'implantation prévue sur le châssis du moteur, on peut privilégier les accès 114 ou 114b, pour une plus grande facilité dans les opérations de raccordement. Dans cette version, le socle de montage 136b du second élément comporte une embase 137b à contour circulaire dont le diamètre est supérieur au diamètre extérieur de la partie cylindrique du premier élément qui vient coiffer le bouchon 126. Des lumières 155 en arc-de-cercle sont pratiquées sur la collerette extérieure, ainsi définie, de cette embase pour la fixation du dispositif sur le bâti, avec possibilité de l'orienter en fonction des contraintes d'implantation. Comme précédemment, le plan médian de la surépaisseur 150 en forme d'arceau est perpendiculaire à l'embase 137b et contient le centre de la cavité.

Dans le mode de réalisation de la figure 12, ledit premier élément 115c comporte aussi une surépaisseur 150c dans laquelle sont ménagés les accès. Cependant, cette surépaisseur a la forme d'une couronne complète. Le plan médian de cette couronne est parallèle à l'embase 137c du socle. Certains accès 114 sont agencés entièrement radialement dans cette couronne. D'autres accès 114c comportent, chacun, un trou de faible section 118c d'orientation radiale et un trou taraudé 119c perpendiculaire à celui-ci et débouchant sur une face latérale annulaire 152c de la surépaisseur 150c, en forme de couronne. Le trou 119c est prolongé par une portée conique.

Dans cette variante, la hauteur du dispositif est réduite. L'embase 137b a le même diamètre que la partie cylindrique du premier élément 115c qui vient coiffer le bouchon 126. La fixation se fait en pratiquant dans le bâti un unique trou de diamètre correspondant. Un méplat 156 est pratiqué sur le côté de l'assemblage. Le dispositif peut ainsi être immobilisé dans le trou unique du bâti au moyen d'une seule vis 157.

Bien entendu, n'importe quel mode de fixation envisagé ci-dessus peut être retenu pour n'importe quel mode de réalisation du dispositif de distribution.

## Revendications

1. Dispositif de distribution de carburant pour l'alimentation des cylindres d'un moteur à combustion interne, par injection directe, du type comportant un corps creux dans la paroi duquel sont pratiqués des accès (14, 114) destinés à être reliés, notamment, à une source d'alimentation de carburant sous pression et à une pluralité d'injecteurs alimentant respectivement lesdits cylindres, ledit corps creux comportant au moins deux éléments (15, 16 -115, 116) assemblés pour définir entre eux une cavité (17, 117), **caractérisé en ce que** cette cavité est au moins sensiblement sphérique et **en ce que** chaque accès comprend un trou de faible section (38, 118) d'orientation sensiblement radiale et un trou taraudé (40, 119) de plus grand diamètre débouchant à l'extérieur et se raccordant audit trou de faible section.

2. Dispositif selon la revendication 1, **caractérisé en ce que** les accès sont rapportés par soudage à l'extérieur d'au moins l'un des deux éléments, chaque accès comprenant un trou de faible section (38) précité communiquant avec l'intérieur de ladite cavité.

3. Dispositif selon la revendication 2, **caractérisé en ce qu'**au moins certains accès sont définis sur une couronne (45) rapportée à la surface extérieure de l'un des éléments.

4. Dispositif selon la revendication 3, **caractérisé en ce que** lesdits accès débouchent dans une gorge annulaire (48) creusée sur la face intérieure de ladite couronne, cette gorge communiquant avec des trous (50) pratiqués au travers de l'élément sur lequel est monté ladite couronne, après fixation de celle-ci à la surface extérieure précitée de cet élément.

5. Dispositif selon la revendication 2, **caractérisé en ce qu'**un tel accès au moins est défini dans un embout (55) rapporté par soudure à l'extrémité de l'un ou l'autre des deux éléments précités, ledit embout étant rapporté de façon que ledit accès communique avec un trou (56) correspondant, pratiqué dans la paroi dudit élément.

6. Dispositif selon l'une des revendications précédentes, **caractérisé en ce que** lesdits éléments définissent entre eux une cavité sensiblement sphérique.

7. Dispositif selon l'une des revendications précédentes, **caractérisé en ce que**, pour au moins un accès précité, ledit trou taraudé et le trou de faible section correspondants sont alignés et se raccordent l'un à l'autre par une portée plate ou conique.

8. Dispositif selon l'une des revendications précédentes, **caractérisé en ce que** lesdits éléments (15, 16) sont assemblés par brasure ou autre soudure.

9. Dispositif selon la revendication 2, **caractérisé en ce que** ladite couronne (45) est rapportée par brasure ou autre soudure.

10. Dispositif selon la revendication 4, **caractérisé en ce que** chaque embout (55) est rapporté par brasure ou autre soudure.

11. Dispositif selon l'une des revendications précédentes, **caractérisé en ce que** la paroi interne d'un premier élément (15, 115) précité forme une première calotte sphérique (22, 122) prolongée par un manchon cylindrique (23, 123) ouvert avant assemblage et **en ce qu'**un second élément précité comporte un bouchon cylindrique engagé après assemblage dans ledit manchon et comportant une cuvette à son extrémité interne, formant une seconde calotte sphérique (28, 128) complémentaire de la première.

12. Dispositif selon l'une des revendications précédentes, **caractérisé en ce que** ledit second élément comporte un socle de montage (36, 136).

13. Dispositif selon la revendication 12, **caractérisé en ce que** ledit socle (36, 136) comporte une collerette annulaire faisant saillie extérieurement par rapport audit bouchon cylindrique et **en ce que** cette collerette est soudée à une zone annulaire correspondante dudit premier élément, entourant l'ouverture dudit manchon.

14. Dispositif selon la revendication 1, **caractérisé en ce qu'**il comporte un évidement annulaire (146) ménagé entre les deux éléments au voisinage de la zone de soudure.

15. Dispositif selon l'ensemble des revendications 13 et 14, **caractérisé en ce que** ledit évidement annulaire (146) est défini par une gorge annulaire pratiquée dans ledit bouchon cylindrique (126) au voisinage de ladite collerette.

16. Dispositif selon la revendication 11, **caractérisé en ce que** les accès (114) précités sont répartis sur au moins la plus grande partie dudit premier élément (115) en étant sensiblement équidistants les uns des autres.

17. Dispositif selon la revendication 11, **caractérisé en ce que** des accès (114) précités sont répartis le long d'une surépaisseur (150) en forme d'arceau dudit premier élément.

18. Dispositif selon la revendication 11, **caractérisé en ce que** des accès (114, 114c) précités sont répartis le long d'une surépaisseur (150c) en forme de couronne dudit premier élément (115c).

19. Dispositif selon la revendication 17 ou 18, **caractérisé en ce qu'**il comporte au moins un accès (114) agencé radialement, le trou de faible section et le trou taraudé étant alignés.

20. Dispositif selon la revendication 17 ou 18, **caractérisé en ce qu'**il comporte au moins un accès comprenant ledit trou de faible section d'orientation radiale (118b, 118c) et un trou taraudé (119b, 119c) perpendiculaire à celui-ci.

21. Dispositif selon l'une des revendications 11 à 20, **caractérisé en ce que** les deux éléments (115, 116) qui le constituent sont en aluminium ou alliage d'aluminium.

22. Dispositif selon l'une des revendications précédentes, **caractérisé en ce que** les orifices internes des trous de faible section (118) sont galetés.

## Claims

1. Fuel distribution device for feeding the cylinders of a fuel-injected internal combustion engine, of the type comprising a hollow body with ports (14, 114) formed in its wall adapted to be connected, in particular, to a supply of fuel under pressure and to a plurality of injectors feeding respectively said cylinders, said hollow body comprising of at least two components (15, 16 - 115, 116) assembled together to define a cavity (17, 117) between them, **characterized in that** the cavity is at least substantially spherical and **in that** each port comprises a substantially radially oriented small section hole (38, 118) and a larger diameter screwthreaded hole (40, 119) opening to the outside and connected to said small section hole.

2. Device according to claim 1 **characterized in that** the ports are welded to the exterior of at least one of the two components, each port comprising one of the aforementioned small section holes (38) communicating with the interior of said cavity.

3. Device according to claim 2 **characterized in that** at least some ports are defined on a ring (45) attached to the outside surface of one of the components.

4. Device according to claim 3 **characterized in that** said ports open into an annular groove (48) on the inside face of said ring, said groove communicating with holes (50) through the component on which said ring is mounted after fixing thereof to the aforementioned outside surface of that component.

5. Device according to claim 2 **characterized in that** at least one port is defined in an end-piece (55) welded to the end of one or other of the aforementioned two components, said end-piece being attached in such fashion that said port communicates with a corresponding hole (56) in the wall of said component.

6. Device according to any one of the preceding claims **characterised in that** said components define a substantially spherical cavity between them.

7. Device according to any one of the preceding claims **characterized in that**, for at least one of the aforementioned ports, said screwthreaded hole and the corresponding small section hole are aligned and are connected to each other by a flat or conical bearing surface.

8. Device according to any one of the preceding claims **characterized in that** said components (15, 16) are assembled by brazing or other welding.

9. Device according to claim 2 **characterized in that** said ring (45) is joined by brazing or other welding.

10. Device according to claim 4 **characterised in that** each end-piece (55) is joined by brazing or other welding.

11. Device according to any one of the preceding claims **characterized in that** the inside wall of a first of the aforementioned components (15, 115) forms a first spherical dome (22, 122) extended by a cylindrical sleeve (23, 123) that is open prior to assembly and and **in that** a second of the aforementioned components comprises a cylindrical plug engaged after assembly in said sleeve and comprising a cup at its inside end forming a second spherical dome (28, 128) complementary to the first.

12. Device according to any one of the preceding claims **characterized in that** said second component comprises a mounting base (36, 136).

13. Device according to claim 12 **characterized in that** said base (36, 136) comprises an annular flange projecting externally relative to said cylindrical plug and **in that** the flange is welded to a corresponding annular area of said first component surrounding the opening of said sleeve.

14. Device according to claim 1 **characterized in that** it comprises an annular recess (146) between the two components in the vicinity of the weld area.

15. Device according to claim 13 in conjunction with claim 14 **characterized in that** said annular recess (146) is defined by an annular groove in said cylindrical plug (126) in the vicinity of said flange.

16. Device according to claim 11 **characterized in that** the aforementioned ports (114) are distributed over at least the greater part of said first component (115) and substantially equidistant from each other.

17. Device according to claim 11 **characterized in that** the aforementioned ports (114) are distributed along an arcuate increased thickness portion (150) of said first component.

18. Device according to claim 11 **characterized in that** the aforementioned ports (114, 114c) are distributed along a ring-shape increased thickness portion (150c) of said first component (115c).

19. Device according to claim 17 or claim 18 **characterized in that** it comprises at least one radial port (114) and the small section hole and screwthreaded hole are aligned.

20. Device according to claim 17 or claim 18 **characterized in that** it comprises at least one port comprising said radially oriented small section hole (118b, 118c) and a screwthreaded hole (119b, 119c) perpendicular thereto.

21. Device according to any one of claims 11 to 20 **characterized in that** the two components (115, 116) that constitute it are made of aluminum or aluminum alloy.

22. Device according to any one of the preceding claims **characterized in that** the internal orifices of the small section holes (118) are burnished.

## Patentansprüche

1. Verteilervorrichtung für die Kraftstoffversorgung von Zylindern eines Verbrennungsmotors durch Direkteinspritzung, entsprechend einer Ausführungsform, die einen Hohlkörper, in dessen Wand Zugänge (14, 114) ausgebildet sind, welche dazu ausgelegt sind, insbesondere mit einer unter Druck stehenden Krafistoffversorgung verbunden zu werden, sowie mehrere Injektoren aufweist, welche jeweils die Zylinder versorgen, wobei der Hohlkörper mindestens zwei Elemente (15, 16 - 115, 116) aufweist, welche zusammengesetzt sind, um zwischen sich einen Hohlraum (17, 117) zu definieren, **dadurch gekennzeichnet, dass** der Hohlraum zumindest annähernd sphärisch ist und dass jeder Zugang eine Öffnung geringeren Querschnitts (38, 118) mit im wesentlichen radialen Verlauf sowie eine Gewindebohrung (40, 119) größeren Durchmessers aufweist, welche nach außen mündet und sich an die Öffnung geringeren Querschnitts anschließt.

2. Vorrichtung nach Anspruch 1, **dadurch gekennzeichnet, dass** die Zugänge durch Schweißen an das Äußere mindestens eines der beiden Elemente angesetzt sind, wobei jeder Zugang eine zuvor genannte Öffnung geringeren Querschnitts (38) aufweist, welche mit dem Inneren des Hohlraums in Verbindung steht.

3. Vorrichtung nach Anspruch 2, **dadurch gekennzeichnet, dass** zumindest bestimmte Zugänge an einem auf die Außenoberfläche eines der Elemente aufgesetzten Kranz (45) definiert sind.

4. Vorrichtung nach Anspruch 3, **dadurch gekennzeichnet, dass** die Zugänge in eine ringförmige Vertiefung (48) münden, welche an der Innenseite des Kranzes ausgenommen ist, wobei die Vertiefung mit Öffnungen (50), welche quer durch das Element ausgebildet sind, auf welchem der Kranz befestigt ist, nach dessen Befestigung an der zuvor genannten Außenoberfläche des Elementes in Verbindung steht.

5. Vorrichtung nach Anspruch 2, **dadurch gekennzeichnet, dass** mindestens einer der Zugänge in einem Ansatz (55) definiert ist, welcher außen an dem einen oder dem anderen der beiden Elemente durch Schweißen angesetzt ist, wobei der Ansatz derart angesetzt ist, dass der Zugang mit einer zugeordneten Öffnung (56) kommuniziert, welche in der Wand des Elementes ausgebildet ist.

6. Vorrichtung nach einem der vorhergehenden Ansprüche, **dadurch gekennzeichnet, dass** die Elemente zwischen sich einen im wesentlichen sphärischen Hohlraum definieren.

7. Vorrichtung nach einem der vorhergehenden Ansprüche, **dadurch gekennzeichnet, dass** bei mindestens einem Zugang die Gewindebohrung und die zugeordnete Öffnung geringeren Querschnitts miteinander fluchten und durch eine ebene oder konische Fläche miteinander verbunden sind.

8. Vorrichtung nach einem der vorhergehenden Ansprüche, **dadurch gekennzeichnet, dass** die Elemente (15, 16) durch Löten oder andersartiges Schweißen miteinander verbunden sind.

9. Vorrichtung nach Anspruch 2, **dadurch gekennzeichnet, dass** der Kranz (45) durch Löten oder andersartiges Schweißen angesetzt ist

10. Vorrichtung nach Anspruch 4, **dadurch gekennzeichnet, dass** jeder Ansatz (55) durch Löten oder andersartiges Schweißen angesetzt ist.

11. Vozrichtung nach einem der vorhergehenden Ansprüche, **dadurch gekennzeichnet, dass** die Innenwand des ersten Elementes (15, 115) eine erste sphärische Kalotte (22, 122) bildet, welche durch eine vor dem Zusammenbau offene zylindrische Hülse (23, 123) verlängert ist, und dass das zweite Element einen zylindrischen Stopfen aufweist, welche nach dem Zusammenbau in der Hülse aufgenommen ist und an seinem inneren Ende eine Schale hat, welche eine zur ersten komplementäre zweite sphärische Kalotte (28, 128) bildet.

12. Vorrichtung nach einem der vorhergehenden Ansprüche, **dadurch gekennzeichnet, dass** das zweite Element einen Befestigungssockel (36, 136) aufweist.

13. Vorrichtung nach Anspruch 12, **dadurch gekennzeichnet, dass** der Sockel (36, 136) einen ringförmigen Kragen aufweist, welcher einen Außenansatz durch Befestigen an der zylindrischen Hülse bildet, und dass der Kragen in Übereinstimmung mit dem ersten Element an einen ringförmigen Bereich geschweißt ist, welcher die Öffnung der Hülse umläuft.

14. Vorrichtung nach Anspruch 1, **dadurch gekennzeichnet, dass** sie eine zwischen den Elementen in der Nähe der Schweißzone ausgebildete ringförmige Ausnehmung (146) aufweist.

15. Vorrichtung nach einer Kombination der Ansprüche 13 und 14, **dadurch gekennzeichnet, dass** die ringförmige Ausnehmung (146) durch eine an dem zylindrischen Stopfen (126) nahe dem Kragen ausgebildete ringförmige Vertiefung definiert ist.

16. Vorrichtung nach Anspruch 11, **dadurch gekennzeichnet, dass** die Zugänge (114) im wesentlichen gleichmäßig zueinander beabstandet über zumindest einen großen Teil des ersten Elementes verteilt sind.

17. Vorrichtung nach Anspruch 11, **dadurch gekennzeichnet, dass** die Zugänge (114) über die Länge einer in Form eines Bogens ausgebildeten Überdicke (150) des ersten Elementes verteilt sind.

18. Vorrichtung nach Anspruch 11, **dadurch gekennzeichnet, dass** die Zugänge (114, 114c) über die Länge einer in Form eines Kranzes ausgebildeten Überdicke (150c) des ersten Elementes verteilt sind.

19. Vorrichtung nach Anspruch 17 oder 18, **dadurch gekennzeichnet, dass** sie mindestens einen Zugang (114) aufweist, welcher radial angeordnet ist, wobei die Öffnung geringeren Querschnitts und die Gewindebohrung miteinander fluchten.

20. Vorrichtung nach Anspruch 17 oder 18, **dadurch gekennzeichnet, dass** sie mindestens einen Zugang mit der radial verlaufenden Öffnung geringeren Querschnitts (118b, 118c) und einer rechtwinklig zu dieser verlaufenden Gewindebohrung (119b, 119c) hat.

21. Vorrichtung nach einem der Ansprüche 11 bis 20, **dadurch gekennzeichnet**, das die beiden Elemente (115, 116), die sie bilden, aus Aluminium oder einer Aluminiumlegierung sind.

22. Vorrichtung nach einem der vorhergehenden Ansprüche, **dadurch gekennzeichnet, dass** die Innenöffnungen der Öffnungen geringeren Querschnitts (118) prägepoliert sind.
